# EUROPÄISCHE PATENTSCHRIFT

(11) **EP 0 415 490 B1**
(45) Veröffentlichungstag und Bekanntmachung des Hinweises auf die Patenterteilung: **14.12.1994**
(21) Anmeldenummer: 90202277.1
(22) Anmeldetag: 27.08.1990
(51) Int. Cl.: H02M 7/5387

(54) **Schaltungsanordnung zum Speisen einer Last**
Circuit arrangement for power supply to a load
Disposition de circuit pour l'alimentation d'une charge

(30) Priorität: 31.08.1989 DE 3928809
(43) Veröffentlichungstag der Anmeldung: 06.03.1991
(73) Patentinhaber: Philips Patentverwaltung GmbH, 22335 Hamburg (DE); Philips Electronics N.V., 5621 BA Eindhoven (NL)
(72) Erfinder: Schäfer, Ralf, Dr., D-5100 Aachen (DE); Wegener, Armin, D-5100 Aachen (DE)
(74) Vertreter: Peters, Carl Heinrich, Dipl.-Ing.

(56) Entgegenhaltungen:
- EP-A- 0 114 370
- EP-A- 0 192 553
- DE-A- 3 709 382
- FR-A- 2 140 636

## Beschreibung

Die Erfindung bezieht sich auf eine Schaltungsanordnung zum Speisen einer Last aus einer Gleichspannungsquelle gemäß dem Oberbegriff des Hauptanspruchs.

Eine derartige Schaltungsanordnung ist aus der US-PS 3,710,229 bekannt. Dabei wird angenommen, daß mit der dortigen Ausgangsspannung Eout eine Last gespeist werden soll. Dies geschieht aus einer Gleichspannungsquelle (+VDC, -VDC) über eine Schalterbrücke aus vier Leistungsschaltern Q1, Q2, Q3 und Q4. Die Leistungsschalter verbinden dabei die als an die Spannung Eout angeschlossen angenommene Last in wechselnder Polarität mit der Gleichspannungsquelle, wie dies in den Fig. 2 bis 4 der US-PS 3,710,229 dargestellt ist. Dazu umfaßt die bekannte Schaltungsanordnung eine Wechselspannungs-Referenzquelle 16, die eine sinusförmige Referenzspannung Vref abgibt, deren Frequenz und Amplitude mit der gewünschten Frequenz und Amplitude der Ausgangsspannung Eout übereinstimmt. Diese Sinusreferenz wird zum einen einem Komparator 22 zugeführt, durch den über eine Treiberschaltung 24 der Leistungsschalter Q1 während der positiven Halbwelle der Sinusreferenz und der Leistungsschalter Q2 während der negativen Halbwelle der Sinusreferenz ununterbrochen leitend geschaltet werden.

Die Schaltungsanordnung gemäß US-PS 3,710,229 umfaßt weiterhin einen Differenzverstärker 30, dessen einem Eingang die Sinusreferenz und dessen zweitem Eingang die der angenommenen Last zuzuführende Ausgangsspannung Eout zugeführt wird, die von der Schalterbrücke Q1 bis Q4 über einen Transformator T und Glättungselemente L1, C1 abgegriffen wird. Der Differenzverstärker 30 bildet die Differenz der Ausgangsspannung Eout und der Sinusreferenz Vref. Diese Differenz wird im Integrator 32 integriert.

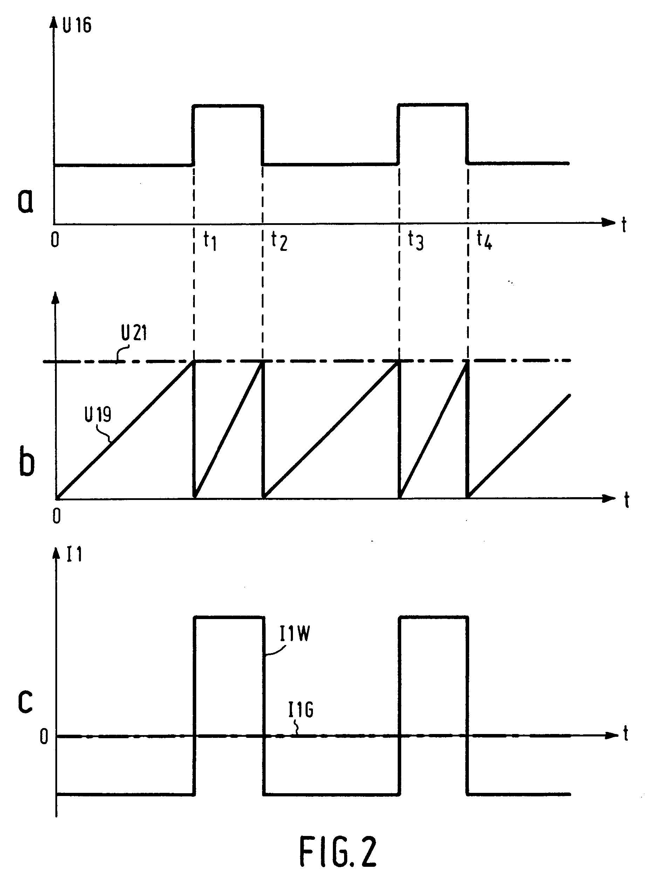

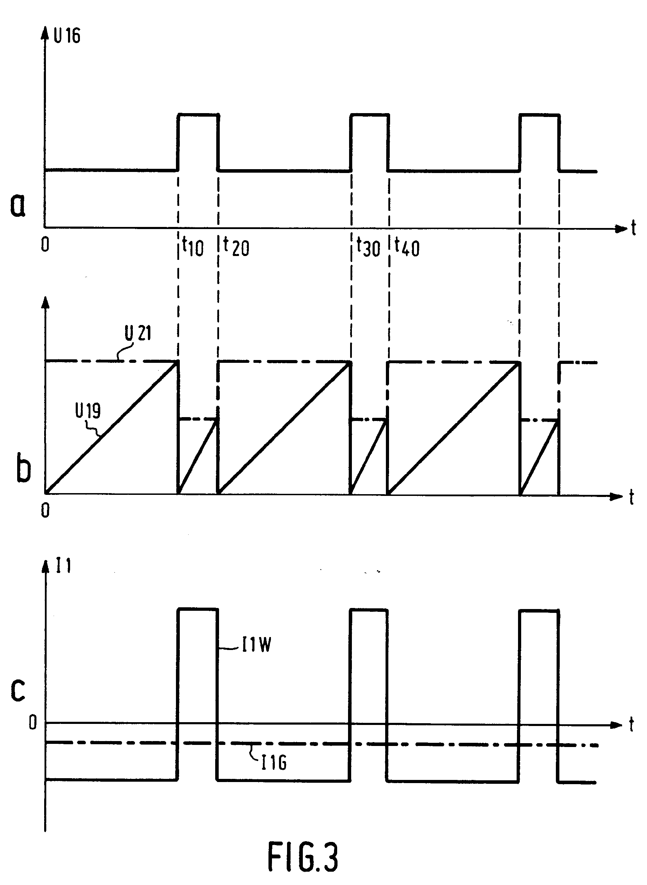

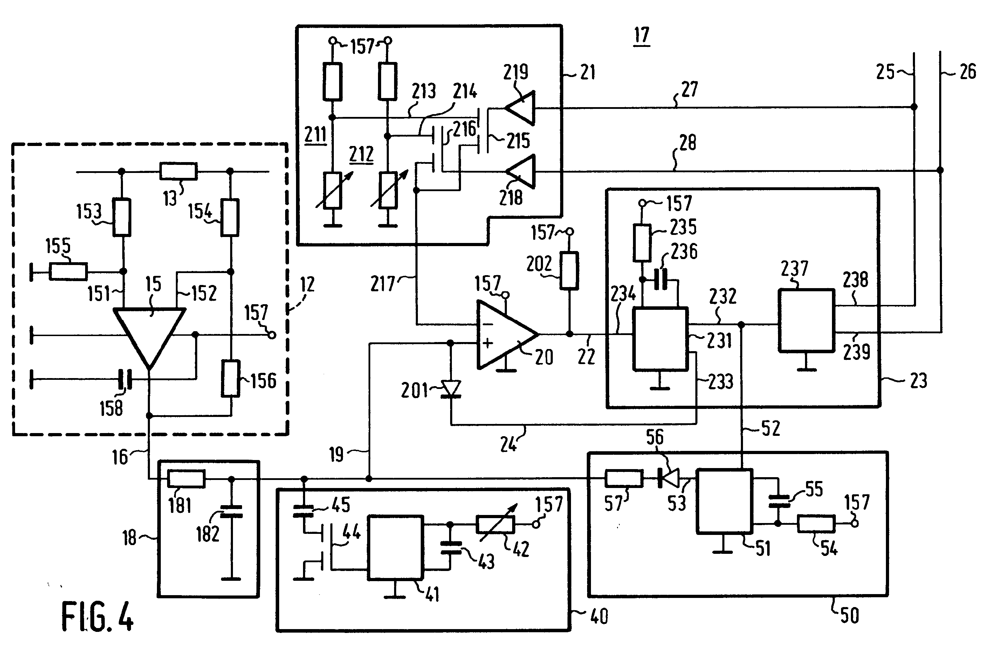

Die US-PS 3,710,229 zeigt außerdem einen Komparator 34, in dem das dem Integral der Spannungsdifferenz entsprechende Signal, welches vom Integrator 32 abgegeben wird, mit zwei Schwellenspannungen VH und VL verglichen wird. Überschreitet das Ausgangssignal des Integrators 32 die obere Schwellenspannung VH, wird der Leistungsschalter Q3 eingeschaltet, wohingegen der Leistungsschalter Q4 eingeschaltet wird, wenn das Ausgangssignal des Integrators 32 die untere Schwellenspannung VL erreicht, vgl.
US-PS 3,710,229, Spalte 3, Zeilen 26 bis 32. Demgemäß arbeiten die Leistungsschalter Q3 und Q4 beim Stand der Technik unabhängig von den Leistungsschaltern Q1 und Q2, vgl. Spalte 3, Zeilen 34 bis 36, sowie Fig. 3 und Fig. 4. Das Ausgangssignal des Integrators 32 pendelt gemäß Fig. 6 zwischen den Schwellenspannungen VH und VL. Auf diese Weise wird - wie in Fig. 2 der US-PS 3,710,229 dargestellt ist - in einer Art Pulsweitenmodulation durch positive und negative Impulse der Ausgangsspannung Eout ein Spannungsverlauf erzeugt, der nach Glättung weitgehend dem Verlauf der Sinusreferenz Vref entsprechen soll. Dies ist auch das Ziel des Gegenstandes der US-PS 3,710, 229, vgl. Spalte 1, 2. Abschnitt.

Aus der US-PS 3,700,960 ist eine Schaltungsanordnung zum Betreiben einer stabförmigen Metallhalogenidlampe bekannt. Diese Schaltungsanordnung soll die Ungleichförmigkeit der Lichtabstrahlung einer solchen Lampe über ihrer Länge, die insbesondere durch Kataphorese und ungleichförmige Betriebstemperaturen hervorgerufen wird, dadurch beheben, daß dem Entladungsstrom der Lampe ein Gleichstromanteil überlagert wird, dessen Größe und Polarität geregelt werden. Dazu wird eine Anordnung vorgeschlagen, in der die Lampe aus einer Gleichspannungsquelle gespeist wird, gesteuert durch eine Steuerschaltung, die Halbleiterbauelemente als Polaritätsumkehrschalter verwendet. Die Zeit, während der der Strom in einer Polarität fließt, wird bestimmt durch die Richtung und den Grad der Ungleichförmigkeit der Lampenstrahlung. Dazu ist ein Paar Fotosensoren, die die Lichtmenge messen, an einander gegenüber liegenden Enden der Lampe angeordnet. Die von Ihnen abgegebenen Signale werden einem Differenzverstärker zugeführt, der als Nulldurchgangsdetektor ausgebildet ist. Mit dem Ausgangssignal dieses Differenzverstärkers werden Treiberschaltungen gesteuert, durch die die Transistor-Leistungsschalter geschaltet werden.

Die bekannte Schaltungsanordnung erfordert insbesondere durch die Fotosensoren einen erhöhten Konstruktionsaufwand; außerdem besteht durch Fremdlichteinfall unterschiedlicher Stärke auf die Fotosensoren die Gefahr eines nicht kompensierten Regelfehlers und damit einer unerwünschten Gleichstromes.

Die Erfindung hat die Aufgabe eine einfache Schaltungsanordnung zum präzisen Einstellen und Regeln eines vorgegebenen Gleichstromanteils durch eine Last zu schaffen.

Die Aufgabe wird bei einer Schaltungsanordnung der eingangs genannten Art erfindungsgemäß gelöst durch die kennzeichnenden Merkmale des Hauptanspruchs.

Beim Gegenstand der vorliegenden Erfindung wird somit nicht die Spannung, sondern der Strom gemessen. Dies ist insbesondere wesentlich für Lasten mit nichtlinearen Strom-Spannungs-Kennlinen, für die eine Schaltungsanordnung gemäß US-PS 3,710,229 völlig ungeeignet ist, wenn es gemäß der Aufgabe der vorliegenden Erfindung, um eine präzise Einstellung eines vorgegebenen Gleichstromanteils geht. Ferner ist es das Ziel der US-PS 3,710,229, an der Last eine bestimmte Spannungsform zu erzeugen. Bei der erfindungsgemäßen Schaltungsanordnung werden dagegen in einfacher Weise die aufeinanderfolgenden Stromintegrale der in unterschiedlicher Richtung durch die Last fließenden Ströme mit einem Referenzwert Verglichen und somit aneinander angeglichen bzw. ist zwischen ihnen eine vorgebbare Differenz einstellbar, durch die ein entsprechender, nicht verschwindender Gleichstromanteil präzise eingestellt werden kann. Das Umschalten des Referenzwertes bei jedem Auftreten des Schaltsignals auf den jeweils anderen von zwei vorgegebenen Werten nach einer bevorzugten Weiterbildung bewirkt, daß die Stromintegrale für eine Polarität des Stromes durch die Last einen anderen Wert annehmen als die Stromintegrale für die andere Polarität des Stromes durch die Last. Wenn demgegenüber beim Stand der Technik von zwei Schwellenspannungen gesprochen wird, handelt es sich dabei um zwei konstante Schwellen, zwischen denen das Integral der Spannungsdifferenz pendelt. Das bedeutet aber, daß sowohl beim Integrieren positiver als auch beim Integrieren negativer Werte der Spannungsdifferenz stets derselbe Abstand zwischen den beiden Schwellen durchmessen wird, so daß - ausgedrückt mit den Begriffen der vorliegenden Erfindung - für die Integration der positiven und diejenige der negativen Werte stets derselbe, übereinstimmende Referenzwert (nämlich die Differenz zwischen VH und VL) maßgebend ist. Einer Umschaltung der Referenzwerte wie in der vorliegenden Erfindung würde eine Veränderung von VH oder VL in Abhängigkeit vom Ansteigen oder Fallen der Kurve des Ausgangssignals des Integrators 32 in Fig. 6 der US-PS 3,710,229 entsprechen; ein solches ist aber in dieser Druckschrift nicht erwähnt und durch sie auch nicht nahegelegt.

Bei der erfindungsgemäßen Schaltungsanordnung findet eine unmittelbare Messung des Stromes durch die Last statt, wobei Meßfehler aus einer Lichtmessung wie in der Anordnung nach US-PS 3,700,960 von vornherein ausgeschlossen werden. Die Regelung bei der erfindungsgemäßen Schaltungsanordnung wird außerdem durch eine Ladungsintegration mit derselben Integrationsstufe für beide Polaritäten des Stromes ausgeführt. Dadurch werden weitere Fehlerquellen ausgeschlossen. Bei einem während des gesamten Betriebes der erfindungsgemäßen Schaltungsanordnung konstanten Referenzwert wird die durch die Last fließende elektrische Ladung daher im Mittel exakt zu Null ausgeregelt, so daß eine Kataphorese von vornherein nicht auftreten kann, selbst bei Auftreten unvermeidlicher Fertigungstoleranzen des Schaltungsaufbaues. Dabei entfällt auch ein beim Gegenstand der US-PS 3,700,960 notwendiger Abgleich der Schaltungsanordnung.

Die erfindungsgemäße Schaltungsanordnung ist darüber hinaus für eine beliebige Last und nicht nur zum Speisen einer Metallhalogenidlampe einsetzbar wie diejenige nach US-PS 3,700,960.

Durch Einstellen des Referenzwertes kann ferner die Periodendauer, mit der die Gleichspannungsquelle in wechselnder Polarität mit der Last verbindbar ist, vorgegeben werden. Durch Wahl unterschiedlicher Referenzwerte für die unterschiedlichen Polaritäten des Stromes durch die Last kann außerdem in einfacher und präzise einstellbarer Weise der Ladungsfluß derart gesteuert werden, daß im Mittel ein (pulsierender) Gleichstrom fließt. Bevorzugt ist der Referenzwert bei jedem Auftreten des Schaltsignals auf den jeweils anderen von zwei vorgegebenen Werten umschaltbar. Die beschriebene Einstellung erfolgt dann durch Vorgabe dieser Referenzwerte.

Insbesondere bei einer Last mit einer beliebig nichtlinearen Strom-Spannungs-Kennlinie läßt sich auf diese Weise unabhängig von der zur Verfügung stehenden Gleichspannungsquelle gezielt ein exakt bemessener Gleichstromanteil einprägen. Im Spezialfall verschwindet dieser Gleichstromanteil.

An dieser Stelle sei bemerkt, daß in der europäischen Anmeldung 361 389 eine Schaltungsanordnung zum Umwandeln von Gleichstromenergie in Wechselstromenergie beschrieben ist, die eine Schaltung zur Beseitigung einer Gleichstromkomponente enthält. Dabei wird das Ausgangssignal von einem Gleichstrom-Wechselstrom-Wandlerkreis gemessen und wird dieses Meßsignal in einem Rechenkreis mit einem Referenzsignal verglichen, wobei ein erstes Ausgangssteuersignal erhalten wird. Dieses erste Ausgangssteuersignal wird in der Schaltungsanordnung zur Beseitigung der Gleichstromkomponente bearbeitet und dabei ein zweites Ausgangssteuersignal gewonnen. Der Gleichstrom-Wechselstrom-Wandlerkreis wird über einen Impulsumwandlungskreis durch das zweite Ausgangssteuersignal gesteuert.

Bei dieser Schaltungsanordnung wird somit das zweite Ausgangssteuersignal unabhängig von den Betriebseigenschaften des Impulsumwandlungskreises, des Gleichstrom-Wechselstrom-Wandlers sowie der - über einen Transformator gespeisten - Last gebildet. In diesen Stufen vorhandene Asymmetrien werden von der Schaltung nicht ausgeregelt und führen nach wie vor zu einem Gleichstromanteil in der Last oder dem ihr vorgeschalteten Transformator.

In einer Weiterbildung enthält die erfindungsgemäße Schaltungsanordnung eine Halbwellenverlängerungsstufe zum Vergrößern des Zeitabstands des Auftretens des Schaltsignals in einem wählbaren Zeitraum unmittelbar nach Inbetriebnahme der Schaltungsanordnung. Diese ist vorteilhaft bei einer Last, die bei Inbetriebnahme einen sehr hohen Anfangsstrom aufnimmt. Beispielsweise tritt beim Zünden einer Hochdruckgasentladungslampe ein solch hoher Strom auf, so daß ein entsprechend hoher Meßwert von der Integrationsstufe aufintegriert wird. Damit wird der Referenzwert schneller erreicht, die Periodendauer des Stromes durch die Last sinkt. In vielen Fällen ist dies unerwünscht, beispielsweise beim Betrieb einer Hochdruckgasentladungslampe, die mit einer Zündschaltung gekoppelt ist, die wiederum für eine bestimmte Periodendauer des Stromflusses dimensioniert wurde. Mit der Halbwellenverlängerungsstufe werden nun die Zeitabstände des Auftretens des Schaltsignals künstlich gegenüber dem Wert vergrößert, den sie allein aufgrund des Stromes durch die Last annehmen müßten. Damit kann für den Strom durch die Last eine optimale Periodendauer eingestellt werden. Der Zeitraum, in dem die Halbwellenverlängerungsstufe wirksam ist, kann den Erfordernissen entsprechend gewählt werden.

Nach einer Weiterbildung der Erfindung sind die Referenzwerte durch die Halbwellenverlängerungsstufe im Zeitraum nach Inbetriebnahme der Schaltungsanordnung vergrößerbar. Dies kann bevorzugt durch Umschalten einer die Referenzwerte liefernden Anordnung durchgeführt werden. Durch Vergrößern der Referenzwerte wird die Zeitspanne verlängert, die die lntegrationsstufe zum Aufintegrieren des Meßwertes bis zum Erreichen der Referenzwerte benötigt. Dieselbe Wirkung wird allerdings auch durch eine entsprechende Umschaltung der Integrationszeitkonstanten in der Integrationsstufe erzielt.

Die letztgenannte Umschaltmöglichkeit wird vorzugsweise dadurch gebildet, daß die Integrationsstufe einen RC-Tiefpaß umfaßt, dessen Kapazität im Zeitraum nach Inbetriebnahme der Schaltungsanordnung eine Zusatzkapazität parallel schaltbar ist.

In einer anderen Vorteilhaften Ausgestaltung der Erfindung ist eine Zwangsumschaltstufe zum zwangsweisen Umkehren der Polarität des Stromes durch die Last vorgesehen, wenn der Zeitabstand des Auftretens des Schaltsignals einen vorgebbaren Wert übersteigt. Die Zwangsumschaltstufe wird in dem Fall wirksam, daß der Strom durch die Last zu niedrige Werte annimmt, beispielsweise bei einem Defekt oder einer Stromunterbrechung in der Last. In diesem Fall würde die durch die Integrationsstufe bestimmte Periodendauer des Stromes durch die Last sehr lang, da die aufintegrierten Meßwerte erst nach einer großen Zeitdauer die Referenzwerte erreichen. Entsprechend lange verharrt dann die Schalterbrücke in einem bestimmten Zustand. Ja nach Speisung der Schalterbrücke und der Steuerschaltung kann in einem solchen Fall die zugehörige Versorgungsspannung so weit absinken, daß die Betriebsweise der Schaltungsanordnung ungünstig beeinflußt wird. Es muß dann die Periodendauer, mit der die Gleichspannungsquelle in wechselnder Polarität mit der Last verbindbar ist, zu großen Werten hin begrenzt werden. Dies wird dadurch erreicht, daß nach Ablauf der entsprechenden Zeitdauer die Zwangsumschaltstufe ein zwangsweises Umkehren der Polarität des Stromes durch die Last auslöst, unabhängig von dem augenblicklich von der Integrationsstufe gelieferten Wert.

Weitere vorteilhafte Ausgestaltungen der erfindungsgemäßen Schaltungsanordnung sind den Ansprüchen zu entnehmen.

Ein Ausführungsbeispiel der Erfindung ist in der Zeichnung dargestellt und wird im nachfolgenden näher beschrieben.
Es zeigen
- Fig. 1: eine erfindungsgemäße Schaltungsanordnung zum Speisen einer Last,
- Fig. 2 und 3: Zeitdiagramme zur Erläuterung zweier Betriebsfälle der Schaltungsanordnung nach Fig. 1 und
- Fig. 4: eine detailliertere Darstellung einer Steuerschaltung zur Verwendung in der Schaltungsanordnung nach Fig. 1.

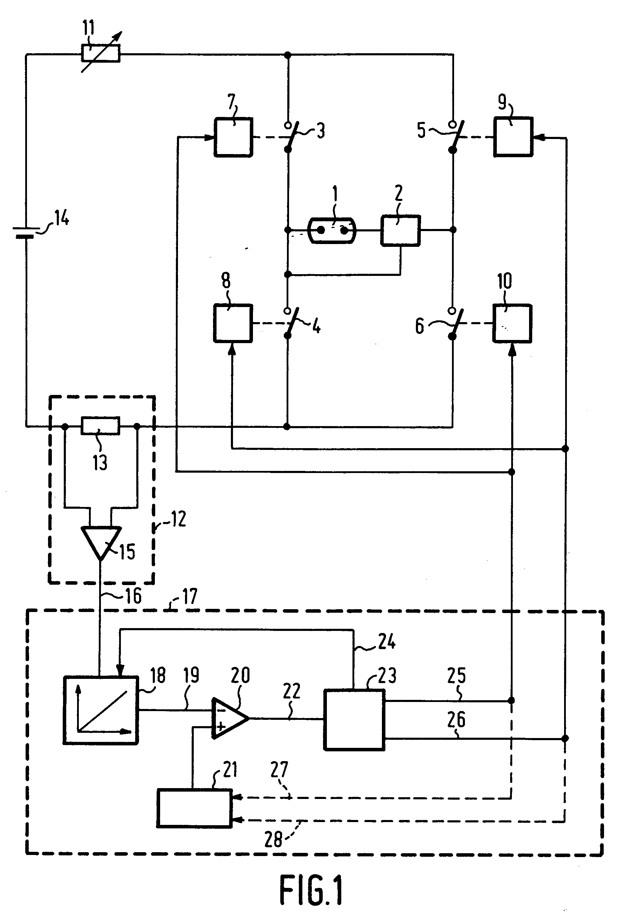

In der Schaltungsanordnung nach Fig. 1 ist als Beispiel für eine Last mit nicht linearer Strom-Spannungs-Kennlinie eine Gasentladungslampe 1 dargestellt, die in Reihe mit einer Zündschaltung 2 angeordnet ist. Dabei ist ein Anschluß der Zündschaltung 2 mit einem Anschluß der Gasentladungslampe 1, ein weiterer Anschluß der Zündschaltung 2 mit dem anderen Anschluß der Gasentladungslampe 1 verbunden. Derartige Zündschaltungen sind im Prinzip bekannt und daher im einzelnen nicht Gegenstand der nachfolgenden Beschreibung.

Die Kombination aus Gasentladungslampe 1 und Zündschaltung 2 ist mit der Verbindung zwischen dem weiteren Anschluß der Zündschaltung 2 und dem ihm zugeordneten Anschluß der Gasentladungslampe 1 einerseits und einem dritten Anschluß der Zündschaltung 2 andererseits als Querzweig in eine Schalterbrücke eingefügt, die aus schematisch dargestellten Schalterelementen 3, 4 in einem ersten Zweig und 5, 6 in einem zweiten Zweig besteht. Die Schalterelemente 3, 4, 5, 6 sind zwar als mechanische Schalter dargestellt, in der Praxis jedoch bevorzugt mit Halbleiterschaltelementen, beispielsweise MOS-Transistoren, ausgeführt. Jedes der Schaltelemente 3, 4, 5 bzw. 6 wird von einer ihm zugeordneten Treiberstufe 7, 8, 9 bzw. 10 geschaltet, d.h. in den leitenden oder in den gesperrten Zustand überführt.

Die beiden Zweige aus den Reihenschaltungen der Schalterelemente 3, 4 bzw. 5, 6, an deren Verbindungspunkten jeweils die Zusammenschaltung aus Gasentladungslampe 1 und Zündschaltung 2 angeschlossen ist, sind zueinander parallel zur Schalterbrücke zusammengefaßt und über einen einstellbaren Strombegrenzungswiderstand 11 sowie einen zu einer Vorrichtung 12 zum Messen eines Stromes durch die Gasentladungslampe 1 gehörenden Meßwiderstand 13 mit einer Gleichspannungsquelle 14 verbunden. Die Gleichspannungsquelle 14 ist als Batterie dargestellt, kann jedoch ebenso durch ein Schaltnetzteil oder eine Kombination aus einem Energiespeicher und einem derartigen Netzteil gebildet sein.

Die Zündschaltung 2 ist derart ausgebildet, daß im Betrieb bei gezündeter Gasentladungslampe 1 kein oder nur ein vernachlässigbar kleiner Strom parallel zur Gasentladungslampe 1 geführt wird. In einem Schaltzustand, in dem beispielsweise die Schalterelemente 3 und 6 leitend und die Schalterelemente 4 und 5 gesperrt sind oder umgekehrt entspricht dann der durch die Gasentladungslampe 1 fließende Strom wenigstens nahezu exakt dem Strom durch den Meßwiderstand 13. Durch die beschriebenen Schaltzustände der Schalterelemente 3 bis 6 kann außerdem der Strom durch die Gasentladungslampe 1 wahlweise in beide Richtungen geleitet werden.

Die Vorrichtung 12 zum Messen des Stromes durch die Gasentladungslampe 1 umfaßt außer dem Meßwiderstand 13 noch einen Meßverstärker 15 mit zwei Eingängen, von denen je einer mit je einem Anschluß des Meßwiderstands 13 verbunden ist. Der Meßverstärker 15 ist bevorzugt als Differenzverstärker ausgebildet, der an seinem Ausgang 16 einen Meßwert in Form einer elektrischen Spannung abgibt, der über den Widerstandswert des Meßwiderstands 13 unmittelbar proportional dem Strom durch die Gasentladungslampe 1 ist.

Der Meßwert vom Ausgang 16 des Meßverstärkers 15 wird einer von einer Steuerschaltung 17 umfaßten Integrationsstufe 18 zugeführt und darin über der Zeit aufintegriert. An einem Ausgang 19 gibt die Integrationsstufe 18 einen aufintegrierten Meßwert ab, der bei Stromfluß durch den Meßwiderstand 13 stetig ansteigt.

Der aufintegrierte Meßwert wird dem invertierenden Eingang einer Vergleichsstufe 20 zugeleitet, deren nichtinvertierendem Eingang weiterhin von einem Referenzwertgeber 21 ein Referenzwert zugeführt wird. Aufintegrierter Meßwert und Referenzwert werden wie der Meßwert am Ausgang 16 bevorzugt in der Form elektrischer Spannung (in analoger Form) übertragen und verarbeitet. In einer Abwandlung der Anordnung nach Fig. 1 können mit entsprechender Ausbildung der Vorrichtung 12 zum Messen des Stromes, der Integrationsstufe 18 und der Vergleichsstufe 20 Meß- und Referenzwerte auch in Form digitaler Signale verarbeitet werden.

Die Vergleichsstufe 20 liefert an ihrem Ausgang 22 ein Schaltsignal, wenn der aufintegrierte Meßwert mit dem Referenzwert übereinstimmt, d.h. ihn - ansteigend - erreicht. Das Schaltsignal vom Ausgang 22 wird einer Signalformstufe 23 zugeleitet, die über eine Rücksetzleitung 24 der Integrationsstufe 18 ein Rücksetzsignal abgibt. Dadurch wird die Integrationsstufe 18 in einen Anfangszustand zurückgesetzt, in dem der aufintegrierte Meßwert am Ausgang 19 einen definierten Anfangswert, beispielsweise Null, annimmt. Mit dem darauffolgenden Stromfluß durch den Meßwiderstand 13 werden dann - ausgehend von diesem Anfangszustand - die Meßwerte am Ausgang 16 der Vorrichtung 12 erneut aufintegriert, bis der aufintegrierte Meßwert am Ausgang 19 wiederum den Referenzwert erreicht und von der Vergleichsstufe 20 ein neues Schaltsignal geliefert wird, das ein neues Rücksetzsignal auf der Rücksetzleitung 24 bewirkt.

Von der Signalformstufe 23 werden weiterhin zwei gegensätzlich gepolte bzw. komplementäre Steuersignale auf zwei Steuerleitungen 25, 26 gegeben, die mit den Treiberstufen 7, 10 bzw. 8, 9 verbunden sind. Durch die Steuersignale werden über die Treiberstufen 7 bis 10 wechselweise die Schalterelemente 3 und 6 bzw. 5 und 4 in den leitenden bzw. in den gesperrten Zustand und umgekehrt geschaltet. Liegt beispielsweise an der Steuerleitung 25 ein Steuersignal mit einem hohen Pegel an, werden über die Treiberstufen 7, 10 die Schalterelemente 3, 6 leitend; entsprechend werden über ein gleichzeitig an der Steuerleitung 26 anliegendes Steuersignal mit niedrigem Pegel die Schalterelemente 5 und 4 mit Hilfe der Treiberstufen 9, 8 in den gesperrten Zustand überführt. von der Gleichspannungsguelle 14 fließt dann ein Strom über den Strombegrenzungswiderstand 11, das Schalterelement 3, die Gasentladungslampe 1 mit der Zündschaltung 2, das Schalterelement 6 und den Meßwiderstand 13. Im umgekehrten Fall fließt der Strom durch die Gasentladungslampe 1 über die Schalterelemente 5 und 4 und damit in zum ersten Fall umgekehrter Polarität. Dabei wird am Meßwiderstand 13 stets ein Strom derselben Polarität, d.h. der Betrag des Stromes durch die Gasentladungslampe 1 gemessen. Für jede Polarität des Stromes durch die Gasentladungslampe 1 wird dann in beschriebener Weise der Meßwert aufintegriert und bei Erreichen des Referenzwertes, d.h. eines vorgegebenen, durch die Gasentladungslampe 1 geflossenen Ladungswertes, die Polarität des Stromes durch die Gasentladungslampe umgekehrt. Dieser Ablauf wiederholt sich für die umgekehrte Polarität usw.. Dadurch wird für jede Polarität des Stromes durch die Gasentladungslampe stets eine genau bestimmte, d.h. präzise abgemessene elektrische Ladung durch die Gasentladungslampe 1 geführt. Bei einem konstanten, zeitunveränderlichen Referenzwert sind die Ladungsmengen für beide Polaritäten des Stromes durch die Gasentladungslampe identisch. Diese Identität ist auch bei Fertigungstoleranzen in der Schaltungsanordnung sowie bei beliebig nichtlinearen Strom-Spannungs-Kennlinien der Gasentladungslampe 1 gewahrt. In jedem Fall wird also ohne besondere, aufwendige Regelanordnungen auch über längere Betriebszeiten hinweg eine Kataphorese wirkungsvoll verhindert.

Die Schaltungsanordnung nach Fig. 1 umfaßt innerhalb der Steuerschaltung 17 außerdem die Möglichkeit, der als Last eingesetzten Gasentladungslampe 1 einen vorgegebenen, mittleren Gleichstrom einzuprägen. Dazu ist der Referenzwertgeber 21 umschaltbar ausgebildet derart, daß er wechselnd zwei unterschiedlich wählbare Referenzwerte dem nichtinvertierenden Eingang der Vergleichsstufe 20 zuführen kann. Diese Referenzwerte werden von der Signalformstufe 23 über von den Steuerleitungen 25 bzw. 26 abzweigende Leitungen 27, 28 durch die Steuersignale wirksam geschaltet. Jeder der Polaritäten des Stromes durch die Gasentladungslampe 1 ist dann einer der Referenzwerte fest zugeordnet, unabhängig von der gegebenenfalls variablen Dauer des Stromflusses.

In Fig. 2 ist zur Erläuterung der Betriebsabläufe der Schaltungsanordnung nach Fig. 1 ein Diagramm für die wichtigsten Meßwerte bzw. Signale und Ströme über der Zeit t dargestellt. Fig. 2a) zeigt dabei den am Ausgang 16 des Meßverstärkers 15 auftretenden Meßwert, der Proportional dem Betrag des Stromes durch die Gasentladungslampe 1 ist. Dieser Meßwert ist im Diagramm mit U16 bezeichnet. Fig. 2c) zeigt den hierzu korrespondierenden Strom I1 durch die Gasentladungslampe 1. Im Zeitintervall zwischen dem hier gewählten Zeitnullpunkt und dem Zeitpunkt t1 fließt ein negativer Strom verhältnismäßig geringer Stromstärke durch den Meßwiderstand 13. Entsprechend zeigt der Meßwert U16 nur einen relativ geringen Betrag. Die in Fig. 2b) dargestellte Spannung U19, die den aufintegrierten Meßwert am Ausgang 19 der Integrationsstufe 18 darstellt, weist dann über der Zeit t eine verhältnismäßig geringe Steigung auf.

Zum Zeitpunkt t1 erreicht der aufintegrierte Meßwert U19 den in Fig. 2b) mit U21 dargestellten Referenzwert. Als Folge davon erscheint am Ausgang 22 der Vergleichsstufe 20 ein Schaltsignal, durch das der Strom I1 in der Gasentladungslampe 1 umgepolt wird. Aufgrund der nichtlinearen Strom-Spannungs-Kennlinie der Gasentladungslampe 1 fließt durch diese nach dem Zeitpunkt t1 ein größerer, positiver Strom. Entsprechend erhält man für den Meßwert U16 eine höhere Spannung, die zu einem stärkeren Anstieg des zum Zeitpunkt t1 wieder beim Wert Null beginnenden aufintegrierten Meßwertes U19 führt. Dieser erreicht zum Zeitpunkt t2 erneut den unveränderten Referenzwert U21. Da der Anstieg des aufintegrierten Meßwertes U19 im Zeitintervall zwischen den Zeitpunkten t1 und t2 größer ist als vor dem Zeitpunkt t1, ist das Zeitintervall, in dem der Strom I1 einen verhältnismäßig hohen, positiven Wert annimmt, entsprechend kürzer.

Zum Zeitpunkt t2 wird der Strom I1 durch die Gasentladungslampe 1 wieder in die zuerst beschriebene Polarität umgeschaltet, so daß sich die Verläufe im Zeitintervall Zwischen dem Zeitnullpunkt und dem Zeitpunkt t2 für die Zeit nach dem Zeitpunkt t2 wiederholen.

In Fig. 2c) ist der beschriebene, die Polarität wechselnde Strom I1 durch die Gasentladungslampe 1 mit I1W bezeichnet. Der Mittelwert dieses rechteckförmigen Wechselstromes ist mit I1G gekennzeichnet und beträgt exakt O.

Fig. 3 zeigt einen Betriebsfall der Schaltungsanordnung nach Fig. 1, in dem der Referenzwert U21 bei jedem Auftreten eines Schaltsignals am Ausgang 22 der Vergleichsstufe 20 umgeschaltet wird. Im Zeitintervall zwischen dem Zeitnullpunkt und dem Zeitpunkt t10 wird ein verhältnismäßig großer Referenzwert U21 eingestellt. Da der Meßwert U16 verhältnismäßig niedrig ist, ergibt sich eine große Zeitdauer, bis der aufintegrierte Meßwert U19 den Referenzwert U21 erreicht. Entsprechend ist das Zeitintervall zwischen dem Zeitnullpunkt und dem Zeitpunkt t10 verhältnismäßig lange. In diesem Zeitintervall fließt ein verhältnismäßig niedriger Strom I1 negativer Polarität.

Zum Zeitpunkt t10 wird wieder durch das Schaltsignal am Ausgang 22 der Vergleichsstufe 20 die Polarität des Stromes I1 durch die Gasentladungslampe 1 umgeschaltet. Es fließt nun ein positiver Strom I1 mit verhältnismäßig großem Betrag, so daß sich ein entsprechend großer Meßwert U16 und damit eine verhältnismäßig große Steigung des aufintegrierten Meßwertes U19 ergibt. Außerdem wird im vorliegenden Beispiel zum Zeitpunkt t10 der Referenzwert U21 auf einen niedrigeren Wert umgeschaltet. Insgesamt erreicht somit der aufintegrierte Meßwert U19 den Referenzwert U21 nach wesentlich kürzerer Zeitdauer als im Betriebsfall nach Fig. 2. Zu diesem Zeitpunkt t20 wird die Polarität des Stromes I1 erneut umgeschaltet, es wiederholt sich der Zeitablauf des Zeitintervalls zwischen dem Zeitnullpunkt und dem Zeitpunkt t20.

In Fig. 3c) ist unter der Bezeichnung I1G der bei diesem Betriebsfall resultierende, hier negative Gleichstrom dargestellt. Sein Wert läßt sich durch Wahl der beiden Werte für den Referenzwert U21 beliebig einstellen.

Fig. 4 zeigt eine detailliertere Darstellung eines Ausschnitts der Schaltungsanordnung nach Fig. 1, insb. der Vorrichtung 12 zum Messen des Stromes durch die Gasentladungslampe 1 und der Steuerschaltung 17, die außerdem gegenüber Fig. 1 eine Ergänzung enthält. Dabei sind bereits beschriebene Elemente wieder mit denselben Bezugszeichen versehen.

Der in Fig. 1 schematisch dargestellte Meßverstärker 15 ist gemäß Fig. 4 als Differenzverstärker ausgebildet, dessen Eingängen 151, 152 über Eingangswiderstände 153, 154 die am Meßwiderstand 13 abgegriffene Spannung zugeführt wird. Vom Eingang 151 ist außerdem ein Widerstand 155 gegen Masse gelegt, vom Eingang 152 ein Überbrückungswiderstand 156 an den Ausgang 16 des Meßverstärkers 15 geführt. Der Meßverstärker 115 wird über einen Stromversorgungsanschluß 157 mit Energie gespeist, von dem ein Stützkondensator 158 gegen Masse geschaltet ist.

Bei der Anordnung nach Fig. 4 umfaßt die lntegrationsstufe 18 einen RC-Tiefpaß, bestehend aus einem Längswiderstand 181 und einer Querkapazität 182. Dies stellt eine besonders einfache Ausgestaltung der lntegrationsstufe 18 dar, die insbesondere für geringe Aufladezeiten, d.h. kurze Periodendauern des Stromflusses durch die Gasentladungslampe 1, vorteilhaft einsetzbar ist. Vorzugsweise ist der RC-Tiefpaß 181, 182 derart dimensioniert, daß die Querkapazität 182 beginnend vom vollständig entladenen Zustand auch bei der längsten, auftretenden Periodendauer des Stromflusses durch die Gasentladungslampe 1 nur auf einen im Vergleich zur Speisespannung am Stromversorgungsanschluß 157 geringen Spannungswert aufgeladen wird. Dann nämlich erfolgt die Aufladung der Querkapazität 182 im wesentlichen noch linear über der Zeit.

In einer aufwendigeren Ausgestaltung der Schaltungsanordnung gemäß Fig. 4 kann die Integrationsstufe 18 auch mit einem Operationsverstärker in an sich bekannter Weise ausgeführt sein.

Die Signalformstufe 23 umfaßt in der Anordnung nach Fig. 4 eine Impulsformstufe 231, die beispielsweise durch einen monostabilen Multivibrator gebildet ist und die an ihren Ausgängen 232 und 233 einen Spannungsimpuls abgibt, wenn an ihrem mit dem Ausgang 22 der Vergleichsstufe 20 gekoppelten Eingang 234 eine ansteigende Signalflanke - das Schaltsignal - auftritt. Die Dauer dieses Spannungsimpulses wird durch einen impulsdauerbestimmenden Widerstand 235 und eine impulsdauerbestimmende Kapazität 236, mit denen die Impulsformstufe 231 in an sich bekannter Weise geschaltet ist, bestimmt. Der am Ausgang 233 auftretende Spannungsimpuls ist negativ gepolt und bewirkt beim Auftreten des Schaltsignals über die Rücksetzleitung 24 und eine Entkopplungsdiode 201 eine Entladung der Querkapazität 182 der Integrationsstufe 18 über deren Ausgang 19.

Vom Ausgang 232 gelangt der - hier beispielsweise positiv gepolte - Spannungsimpuls an den Schalteingang einer Umschaltstufe 237, die bevorzugt als bistabile Kippstufe ausgebildet ist und an ihren Ausgängen 238, 239 gegensinnige, beim Auftreten eines Spannungsimpulses am Ausgang 232 jeweils in ihren Pegeln vertauschte Steuersignale abgibt. Diese werden als zueinander komplementäre Steuersignale über die Steuerleitungen 25 bzw. 26 abgeführt.

Die zueinander komplementären Steuersignale gelangen außerdem über die Leitungen 27, 28 an den Referenzwertgeber 21. Dieser umfaßt für jeden einzustellenden Referenzwert einen einstellbaren Spannungsteiler 211, 212. Von jedem der einstellbaren Spannungsteiler 211 bzw. 212 ist ein Mittelabgriff 213 bzw. 214 über einen Schalttransistor 215 bzw. 216 an einen gemeinsamen Referenzwertausgang 217 geführt. Die Schalttransistoren 215, 216 werden über Treiberstufen 218 bzw. 219, die ggf. eine Potentialverschiebung für die Steuersignale auf den Leitungen 27, 28 enthalten und bei passenden Potentialen zur Ansteuerung der Schalttransistoren 215, 216 auch entfallen können, durch die Steuersignale von der Signalformstufe 23 wechselweise eingeschaltet. Dadurch erscheint im Rhythmus der Umpolungen des Stromes durch die Gasentladungslampe 1 am Referenzwertausgang 217 ein gemäß den Einstellungen der Spannungsteiler 211, 212 wechselnder Referenzwert an der Vergleichsstufe 20, und zwar im Beispiel nach Fig. 4 an deren invertierendem Eingang im Gegensatz zum Beispiel nach Fig. 1, wo der Referenzwert mit dem nichtinvertierenden Eingang der Vergleichsstufe 20 zugeleitet wird. Dies bedeutet jedoch prinzipiell keine Änderung der Betriebsweise der Schaltungsanordnung.

In Fig. 4 ist außerdem der Ausgang 22 der Vergleichsstufe 20 über einen Speisewiderstand 202 mit dem Stromversorgungsanschluß 157 verbunden. An diesen Stromversorgungsanschluß 157 sind auch alle weiteren Signalverarbeitungsstufen der Steuerschaltung 17 der Einfachheit halber angeschlossen. Selbstverständlich können die einzelnen Signalverarbeitungsstufen auch von unterschiedlichen Speisespannungsquellen gespeist werden.

Die Schaltungsanordnung nach Fig. 4 enthält gegenüber der Anordnung nach Fig. 1 zusätzlich eine Halbwellenverlängerungsstufe 40. Diese umfaßt eine Impulsformstufe 41 zum Bilden eines Einschaltimpulses unmittelbar nach Inbetriebnahme der Schaltungsanordnung, d.h. der Steuerschaltung 17. Die Dauer dieses Einschaltimpulses wird in üblicher Weise wieder durch einen mit der Impulsformstufe 41 verbundenen, impulsdauerbestimmenden Widerstand 42 sowie eine impulsdauerbestimmende Kapazität 43 derart festgelegt, daß sie das Zeitintervall von der Inbetriebnahme der Schaltungsanordnung bis zum sicheren Zünden der Gasentladungslampe überdeckt. Während dieses Zeitintervalls wird von der Impulsformstufe 41 über einen Schalttransistor 44 parallel zur Querkapazität 182 des RC-Tiefpasses 181, 182 eine Zusatzkapazität 45 geschaltet.

Durch die Halbwellenverlängerungsstufe 40 wird auf diese Weise in einem Zeitintervall unmittelbar nach Inbetriebnahme der Gasentladungslampe, d.h. während des Zündvorgangs, die Periodendauer für das Umpolen des Stromes durch die Gasentladungslampe 1 erhöht. Damit wird dem Effekt entgegengewirkt, daß während des Zündens der Gasentladungslampe 1 durch diese ein wesentlich höherer Strom als während des Betriebes nach dem Zünden der Gasentladung fließt. Dieser hohe Strom am Meßwiderstand 13 würde zu einer stark beschleunigten Aufladung der Querkapazität 182 führen, so daß von der Integrationsstufe 18 wesentlich kürzere Umschaltperioden ausgelöst würden. Um dies zu vermeiden, wird gemäß Fig. 4 die Querkapazität 182 durch die Zusatzkapazität 45 derart vergrößert, daß die Aufintegration des Meßwertes am Ausgang 19 der Integrationsstufe 18 während des Zündvorgangs wenigstens nahezu mit der gleichen Zeitkonstanten erfolgt wie während des Betriebes der Gasentladungslampe 1 nach Zünden der Gasentladung.

Das gleiche Ergebnis kann in einer Abwandlung der Schaltungsanordnung nach Fig. 4 dadurch erreicht werden, daß durch die Halbwellenverlängerungsstufe 40, insb. die darin angeordnete Impulsformstufe 41, über den Schalttransistor 44 anstelle der Zusatzkapazität 45 ein zusätzlicher Referenzwertgeber, beispielsweise ein zusätzlicher Spannungsteiler in der Form der Spannungsteiler 211 bzw. 212, im Zeitraum unmittelbar nach Inbetriebnahme der Schaltungsanordnung mit dem Referenzwertausgang 217 verbunden wird. Durch diesen zusätzlichen Spannungsteiler bzw. Referenzwertgeber wird dann ein entsprechend vergrößerter Referenzwert der Vergleichsstufe zugeleitet, so daß die Periodendauer des Stromes durch die Gasentladungslampe 1 während des Zündvorgangs wieder in etwa mit derjenigen während des anschließenden Betriebes der Lampe übereinstimmt.

Der impulsdauerbestimmende Widerstand 42 in der Halbwellenverlängerungsstufe 40 ist einstellbar ausgebildet, um eine einfache Anpassung der Dauer des Einschaltimpulses an den Betrieb der verwendeten Lampe zu ermöglichen.

In Fig. 4 ist ferner eine Zwangsumschaltstufe 50 vorgesehen, die einen Zeitgeber 51 umfaßt, der im vorliegenden Beispiel entsprechend den Impulsformstufen 41 oder 231 aufgebaut ist. Der Zeitgeber 51 wird an seinem Eingang 52 durch den Spannungsimpuls am Ausgang 232 der Impulsformstufe 231 gesteuert. Beim Auftreten dieses Spannungsimpulses wird am Ausgang 53 des Zeitgebers 51 ein niedriger Spannungspegel erzeugt, der so lange erhalten bleibt, wie der zeitliche Abstand zweier am Eingang 52 eintreffender Spannungsimpulse einen vorgegebenen Wert nicht überschreitet. Zum Einstellen dieses Wertes ist der Zeitgeber 51 in bekannter Weise mit einem zeitbestimmenden Widerstand 54 und einer zeitbestimmenden Kapazität 55 verbunden. Wird dagegen der zeitliche Abstand zwischen zwei Spannungsimpulsen zu groß, wird der Ausgang 53 auf einen hohen Spannungspegel geschaltet. Über eine Entkopplungsdiode 56 und einen Längswiderstand 57 wird dieser Spannungspegel auf den Ausgang 19 der Integrationsstufe 18 geschaltet und führt dort zu einer vergleichsweise schnellen Aufladung der Querkapazität 182. Dadurch erreicht die an der Querkapazität 182 anliegende Spannung nun sehr schnell den Referenzwert, so daß die Vergleichsstufe 20 ein Schaltsignal auslöst.

Beim Überschreiten des zeitlichen Abstandes zweier Schaltsignale am Ausgang 22 wird somit durch die Zwangsumschaltstufe 50 die Periodendauer des Stromflusses durch die Gasentladungslampe 1 begrenzt. Dieser Fall tritt insbesondere bei einem zu niedrigen Strom durch die Gasentladungslampe 1 auf, z.B. wenn die Lampe verbraucht, defekt oder entfernt worden ist. Im Extremfall würde dann nur noch ein Strom über die Zündschaltung 2 fließen, der ohne Einsatz der Zwangsumschaltstufe 50 zu sehr langen Periodendauern für das Umschalten der Schalterbrücke 3 bis 6 führen würde. Derart lange Periodendauern können aber in bestimmten Fällen zu Schwierigkeiten bei der Stromversorgung insbesondere der als Transistoren ausgebildeten Schalterelemente 3 und 5 führen. Auch würde sich die Notwendigkeit langer Periodendauern ungünstig auf die Dimensionierung der Schalterbrücke 3 bis 6 auswirken.

## Patentansprüche

1. Schaltungsanordnung zum Speisen einer Last (1) aus einer Gleichspannungsquelle (14) über eine Schalterbrücke (3 bis 6), durch die die Gleichspannungsquelle (14) in wechselnder Polarität mit der Last (1) verbindbar ist, mit einer Steuerschaltung (17) zum Steuern der Schalterbrücke (3 bis 6), die eine Integrationsstufe (18), eine Vergleichsstufe (20) zum Liefern eines Schaltsignals (an 22) sowie eine Signalformstufe (23) zum Umkehren der Polarität eines Stromes (I1) durch die Last (1) beim Auftreten des Schaltsignals (an 22) umfaßt,
gekennzeichnet durch eine Vorrichtung (12) zum Messen des Stromes (I1) durch die Last (1) und Liefern eines entsprechenden Meßwertes sowie dadurch, daß die Integrationsstufe (18) zum Aufintegrieren des Meßwertes und die Vergleichsstufe (20) zum Vergleichen des aufintegrierten Meßwertes mit einem Referenzwert (von 21) und zum Liefern des Schaltsignals (an 22) bei Übereinstimmung dieser Werte ausgebildet und daß die Signalformstufe (23) zum Rücksetzen der Integrationsstufe (18) in einen Anfangszustand beim Auftreten des Schaltsignals (an 22) eingerichtet ist.

2. Schaltungsanordnung nach Anspruch 1,
dadurch gekennzeichnet, daß die Vorrichtung (12) zum Messen des Stromes (I1) durch die Last (1) einen Meßwiderstand (13) umfaßt, der in die Verbindung zwischen der Schalterbrücke (3 bis 6) und der Gleichspannungsquelle (14) eingefügt ist.

3. Schaltungsanordnung nach Anspruch 2,
gekennzeichnet durch einen Meßverstärker (15) mit zwei Eingängen, von denen je einer mit je einem Anschluß des Meßwiderstandes (13) verbunden ist.

4. Schaltungsanordnung nach Anspruch 1, 2 oder 3,
dadurch gekennzeichnet, daß der Referenzwert (von 21) bei jedem Auftreten des Schaltsignals (an 22) auf den jeweils anderen von zwei vorgegebenen Werten umschaltbar ist.

5. Schaltungsanordnung nach Anspruch 1, 2, 3 oder 4,
gekennzeichnet durch eine Halbwellenverlängerungsstufe (40) zum Vergrößern des Zeitabstands des Auftretens des Schaltsignals (an 22) in einem wählbaren Zeitraum unmittelbar nach Inbetriebnahme der Schaltungsanordnung.

6. Schaltungsanordnung nach Anspruch 5,
dadurch gekennzeichnet, daß die Referenzwerte (von 21) durch die Halbwellenverlängerungsstufe (40) im Zeitraum nach Inbetriebnahme der Schaltungsanordnung vergrößerbar sind.

7. Schaltungsanordnung nach Anspruch 5,
dadurch gekennzeichnet, daß die Integrationsstufe (18) einen RC-Tiefpaß umfaßt, dessen Kapazität (182) im Zeitraum nach Inbetriebnahme der Schaltungsanordnung eine Zusatzkapazität (45) parallel schaltbar ist.

8. Schaltungsanordnung nach einem der vorhergehenden Ansprüche,
gekennzeichnet durch eine Zwangsumschaltstufe (50) zum zwangsweisen Umkehren der Polarität des Stromes (I1) durch die Last (1), wenn der Zeitabstand des Auftretens des Schaltsignals (an 22) einen vorgebbaren Wert übersteigt.

## Claims

1. A circuit arrangement for supplying a load (1) from a direct voltage source (14) through a switch bridge (3 to 6), by which the DC voltage source (14) can be connected with alternating polarity to the load (1), comprising a control circuit (17) for controlling the switch bridge (3 to 6), which control circuit comprises an integration stage (18), a comparison stage (20) for supplying a switching signal (to 22), and a signal-producing stage (23) for reversing the polarity of a current (I1) through the load (1) when the switching signal (at 22) occurs, characterized by a device (12) for measuring a current (I1) through the load (1) and supplying a corresponding measurement value, and characterized in that the integration stage (18) is constructed for integrating the measurement value, the comparison stage (20) for comparing the integrated measurement value with a reference value (from 21) and for supplying the switching signal (to 22) when these values correspond to each other, and the signal-producing stage (23) for resetting the integration stage (18) to an initial state upon the application of the switching signal (to 22).

2. A circuit arrangement as claimed in Claim 1, characterized in that the device (12) for measuring the current (I1) through the load (1) comprises a measuring resistor (13) which is included in the connection line between the switch bridge (3 to 6) and the DC voltage source (14).

3. A circuit arrangement as claimed in Claim 2, characterized by a measuring amplifier (15) with two inputs, each of which is connected to a respective connection point of the measuring resistor (13).

4. A circuit arrangement as claimed in Claim 1, 2, or 3, characterized in that the reference value (from 21) can be switched over to the other one of two given values upon each occurrence of the switching signal (at 22).

5. A circuit arrangement as claimed in Claim 1, 2, 3, or 4, characterized by a half-wave lengthening stage (40) for increasing the time interval of the occurrence of the switching signal (at 22) in a time period that can be chosen immediately after the circuit arrangement has been put into operation.

6. A circuit arrangement as claimed in Claim 5, characterized in that the reference values (from 21) can be increased by the half-wave lengthening stage (40) in the time period after the circuit arrangement has been put into operation.

7. A circuit arrangement as claimed in Claim 3, characterized in that the integration stage (18) comprises an RC low-pass filter to whose capacitance (182) an additional capacitance (45) can be connected in parallel in the time period after the circuit arrangement has been put into operation.

8. A circuit arrangement as claimed in any one of the preceding Claims, characterized by a forced switch-over stage (50) for forcedly reversing the polarity of the current (I1) through the load (1) when the time interval between the occurrences of the switching signal (at 22) exceeds a given, adjustable value.

## Revendications

1. Circuit conçu pour alimenter une charge (1) à partir d'une source de tension continue (14) par l'intermédiaire d'un pont de commutateurs (3 à 6) permettant de connecter la source de tension continue (14) en polarité alternante à la charge (1), circuit comportant un circuit de commande (17) pour commander le pont de commutateurs (3 à 6) comportant un étage d'intégration (18), un étage de comparaison (20) pour fournir un signal de commutation (à 22) ainsi qu'un étage de formation de signal (23) pour renverser la polarité d'un courant (I1) traversant la charge (1) à la présentation du signal de commande (à 22), caractérisé par un dispositif (12) conçu pour mesurer le courant (I1) traversant la charge (1) et pour fournir une valeur de mesure correspondante, ainsi que du fait que l'étage d'intégration (18) conçu pour intégrer la valeur de mesure et l'étage de comparaison (20) conçu pour comparer la valeur de mesure intégrée avec une valeur de référence (issue de 21) et pour fournir le signal de commutation (à 22) sont formés lorsque ces valeurs sont conformes, et que l'étage de formation de signal (23) est adapté pour remettre l'étage d'intégration (18) dans un état initial à la présentation du signal de commande (à 22).

2. Circuit selon la revendication 1, caractérisé en ce que le dispositif (12) prévu pour la mesure du courant (I1) traversant la charge (1) comporte une résistance de mesure (13) qui est intercalé dans la connexion reliant le pont de commutateurs (3 à 6) à la source de tension continue (14).

3. Circuit selon la revendication 2, caractérisé par un amplificateur de mesure (15) présentant deux entrées, chaque fois une entrée dudit amplificateur étant reliée à l'une des deux connexions de la résistance de mesure (13).

4. Circuit selon la revendication 1, 2 ou 3, caractérisé en ce qu'à chaque présentation du signal de commutation (à 22) la valeur de référence (issue de 21) peut être commutée à l'autre de deux valeurs prédéterminées.

5. Circuit selon la revendication 1, 2, 3 ou 4, caractérisé par un étage de prolongement de la demi-onde (40) pour prolonger l'intervalle de temps de la présentation du signal de commutation (à 22) dans une période de temps pouvant être choisie immédiatement après la mise en fonctionnement du circuit.

6. Circuit selon la revendication 5, caractérisé en ce que les valeurs de référence (issues de 21) peuvent être élargies par l'étage de prolongement de la demi-onde (40) dans la période de temps après la mise en fonctionnement du circuit.

7. Circuit selon la revendication 5, caractérisé en ce que l'étage d'intégration (18) comporte un filtre passe-bas RC dont dans la période de temps après la mise en fonctionnement du circuit la capacité (182) peut être commutée parallèlement à une capacité supplémentaire (45).

8. Circuit selon l'une des revendications précédentes, caractérisé par un étage de conversion forcé (50) conçu pour la conversion forcée de la polarité du courant (I1) traversant la charge (1) lorsque l'intervalle de temps de la présentation du signal de commutation (à 22) dépasse une valeur prédéterminable.
